# EUROPEAN PATENT APPLICATION

(11) **EP 2 047 751 A2**
(43) Date of publication of application: **15.04.2009**
(21) Application number: 08166198.5
(22) Date of filing: 09.10.2008
(51) Int. Cl.: A21C 13/00

(54) **Leavening cell structure, particularly for use together with ovens for baking food**

(30) Priority: 12.10.2007 IT PS20070017 U
(71) Applicant: Moretti Forni S.p.A., 61037 Mondolfo (PU) (IT)
(72) Inventor: Moretti, Marco, 61100, Pesaro PU (IT)
(74) Representative: Gustorf, Gerhard

(57) **Abstract**

Leavening cell structure, particularly for use together with ovens for cooking food, comprising at least one pair of independent chambers (7, 8), separated by a bulkhead (9) that can be removed and/or pushed down and/or reduced to allow the areas to be joined together, closed by recessed doors (4) to keep them open without projections, also acting independently as a leavening cell or as a simple pan stand.

## Description

### DETAILED DESCRIPTION

### Technical scope

In their most complex industrial structures, leavening cells used prior to baking food in ovens comprise metal cabinets with internal heating systems, usually of the forced-air type, internal air ducts for optimising the uniformity of temperature and humidity, and electronic temperature and humidity adjusters.

In small ovens used to bake food for immediate consumption, mainly comprising pizza ovens, leavening cells are generally smaller and, in most cases, they are integrated into the oven support. They are also fitted with the same devices and features that can be found in the large industrial versions.

It is also clear that with smaller ovens, mainly used to bake pizzas, usually located in small areas, operators require modular work accessories that can also perform a large number of functions.

### Objects of the invention

The main object of this invention is, in this context, to provide a leavening cell structure, particularly for use together with small ovens for cooking food that can provide a modular service to the operator, allowing him/her to use it as a leavening cell but also, fully or partly, as a simple pan support, i.e.: the-so called stand.

Another object of this invention is that it achieves the previous object through an innovation concept which is particularly suitable for application in small ovens, where leavening cells are usually used as oven supports, so that they do not interfere with the movements of the operator.

Yet another object of this invention is that it achieves the previous objects through an innovation concept which can be applied to all kinds of ovens, also used for purposes other than cooking food.

A further object of this invention is to achieve the previous objects by using a simple and effective innovation concept which is operationally safe and relatively cheap considering the practical results that it achieves.

### Summary of the invention

These and other objects are all achieved with the leavening cell structure, particularly for use together with ovens for cooking food, according to this invention, comprising at least one pair of independent chambers (7, 8), separated by a bulkhead (9) that can be removed and/or pushed down and/or reduced to allow the areas to be joined together, closed by recessed doors (4) to keep them open without projections, also acting independently as a leavening cell or as a simple pan stand.

### Brief description of the drawings

Additional features and advantages of the leavening cell structure according to this invention will appear more evident from the following detailed description of a chosen but not exclusive form of realisation, represented purely by way of example and not limited to the five attached drawings, where:
figure 1 shows a perspective view of a leavening cell structure according to this invention;

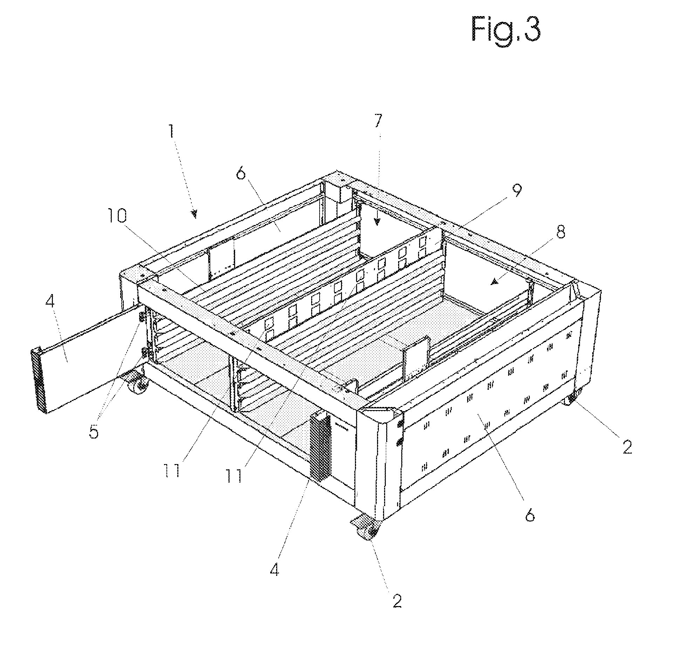

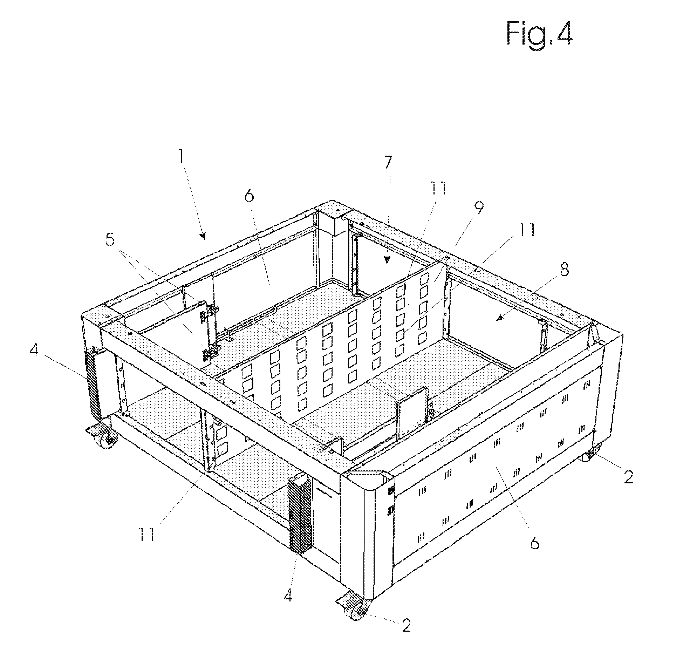

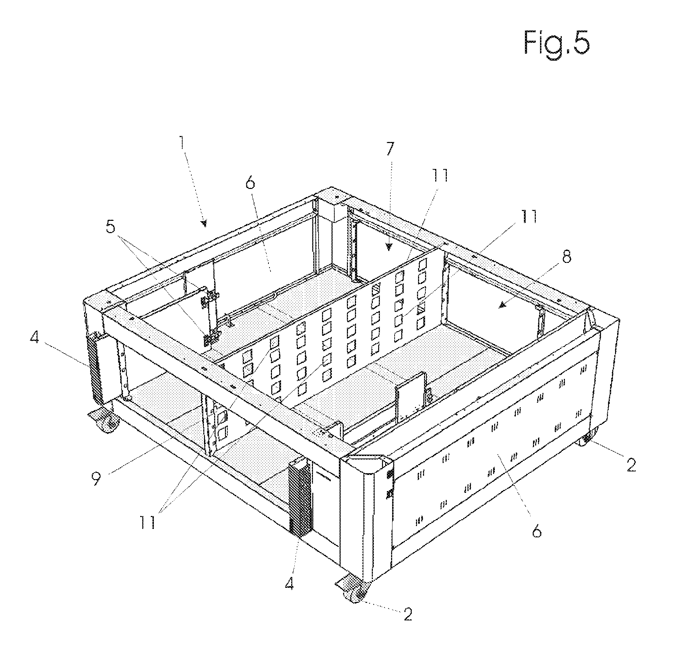

figures 2 to 5 inclusive show respectively the same perspective view of the same structure with the top taken off to show three different conformations of the constituent parts.

### Static description of the preferred embodiment

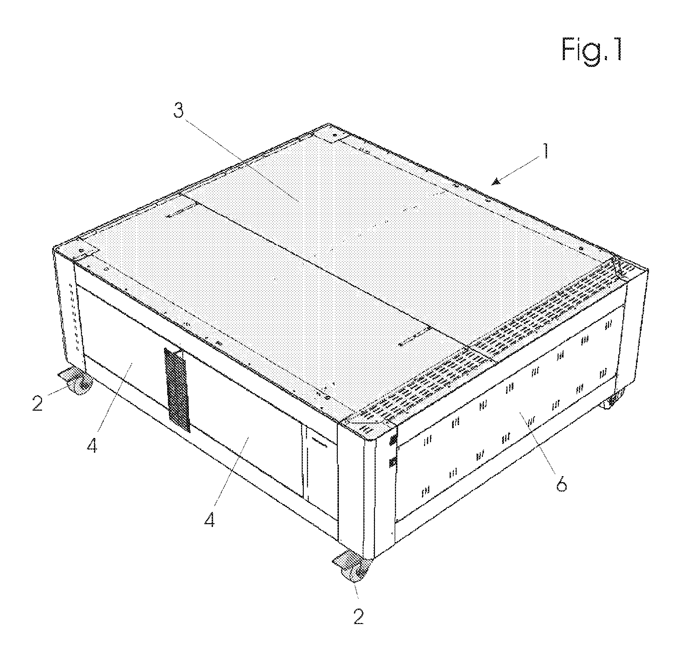

With reference to these figures, particularly figure 1, the number 1 indicates the overall leavening cell according to this invention, comprising a metal parallelepiped structure mounted on wheels 2, with a top 3 used to support a small oven, not illustrated, of any known type for cooking food, in particular an oven for baking pizzas, thus acting as its base.

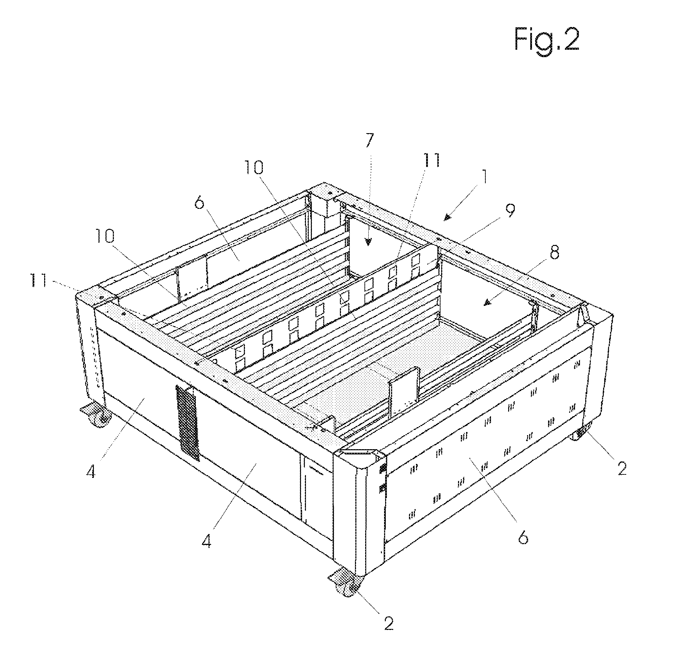

The cell 1 at the front, meaning by this the side containing the door or doors of the baking chamber/s of the overlying oven, not illustrated, two doors 4 opening in opposite directions on lateral hinges 5 (see also figures 2 and subsequent), hinged and sliding along the side walls 6, next to which the doors 4 are housed when open, thus disappearing into the cell 1.

The inside of the cell 1 is divided into two chambers 7 and 8, divided by a central bulkhead 9, each of which is closed by one of the said doors 4.

Chambers 7 and 8 contain sets of superimposed lateral guides 10, on which pans, not illustrated, can be placed.

The central bulkhead 9 comprises a pair of reciprocally sliding metal sheets, with a series of overlapping slots 11, allowing them to be opened, partly obstructed or closed by with the reciprocal sliding of said two metal sheets.

Heating and humidification systems, as well as temperature and humidity measurement equipment can be fitted in each of the two chambers 7 and 8, independent in the two areas, as well as being provided with separate operating commands, not illustrated, preferably electronically controlled; alternatively, heating and humidification systems, as well as temperature and humidity measurement equipment can be provided fitted in just one of the two chambers 7 and 8, for the functions that are described below.

### Dynamic description of the preferred embodiment

Having thus ended the static description of the chosen example of the leavening cell structure according to this invention, as described below, a dynamic or functional description will now be given:
a small oven, not illustrated, of any known type for cooking food, in particular an oven for baking pizzas, can be placed on the top 3 of the parallelepiped structure comprising the leavening cell 1 according to this invention, placed in such a direction that the access doors to the oven chamber, not illustrated, lie above the doors 4 of the cell 1, so that the operator has access to the oven chamber above and access to the chambers 7 and 8 of the cell 1 below.

In this arrangement, by activating the heating and humidification controls of chambers 7 and/or 8 with the central bulkhead 9 open in the slots 11, the operator can leaven the required dough formats in a substantially uniform area.

If the entire capacity of the two chambers 7 and 8 is too large for leavening requirements, or if these do not exist at all, the operator can close the slots 11 in the central bulkhead 9 and, if necessary, disable the heating and humidification systems of the chamber 7 or 8, so that, by leaving the relative door 4 open and pushing it inside the structure of the cell 1, the chamber 7 or 8 remains isolated and open and can be used as a stand for the pans and their contents without the door obstructing operator movements.

The same applies if the operator wishes to disable the leavening cell functions in both chambers 7 or 8, save the possibility of reactivating tem immediately if required.

### Alternative embodiments

Clearly, in additional alternative forms of implementation, nonetheless falling within the innovation concept implicit in the implementation example described above and claimed below, the leavening cell structure according to this invention can be realised with equivalent techniques and mechanics, that is, equipped with additional integrative devices, just as all the conformations of the constituent parts can be altered in a manner suited to the purpose.

### Advantages of the invention

As clearly shown in the above detailed description of a preferred example of implementation and from the mention made above of some realisation variants, the leavening cell structure according to this invention offers the advantages corresponding to the established purposes and others besides: it, in fact, integrates a functional innovation concept aiming at giving leavening cells multi-purpose and modular functions, allowing them to be rapidly used as stands, and vice-versa, without interfering with operator movements, though being within easy reach, in the usually small and never large working areas of small ovens for baking food, in particular in pizza restaurants.

### KEY TO NUMBERS

- 1): overall leavening cell
- 2): wheels
- 3): top
- 4): doors
- 5): hinges
- 6): side walls of the cell
- 7): first chamber inside the cell
- 8): second chamber inside the cell
- 9): central bulkhead
- 10): tray support guides
- 11): slots in central bulkhead

## Claims

1. Leavening cell structure, particularly for use together with ovens for cooking food, **characterised by** the fact that it comprises at least one pair of independent chambers (7, 8), separated by a bulkhead (9) which can be removed and/or pushed down and/or reduced to allow the areas to be joined together, closed by recessed doors (4) to keep them open without projections, also acting independently as a leavening cell or as a simple pan stand.

2. Leavening cell structure as per the previous claim, **characterised by** the fact that it comprises:
- a box structure with a top (3) that can support an oven for cooking food, in particular an oven for baking pizzas, of any known type suitable for the purpose,
- two doors (4) opening in opposite directions on lateral hinges (5) hinged and sliding so as to axially dislocate when open and disappear inside said cell (1),
- at least two chambers (7, 8) fitted inside said cell (1), each closed by one of said doors (4) fitted with superimposed lateral guides (10) on which pans, not illustrated, can be placed,
- at least one bulkhead (9) dividing at least two chambers (7, 8) comprising a pair of reciprocally sliding metal sheets, with a series of overlapping slots (11), allowing them to be opened, partly obstructed or closed by with the reciprocal sliding of said two metal sheets.

3. Leavening cell structure as per the second claim, **characterised by** the fact that said central bulkhead (9) is fitted with slots (11) allowing them to be opened, partly obstructed or closed, structured in any suitable way for the purpose.

4. Leavening cell structure as per the first, second or third claim, **characterised by** the fact that each of said two chambers (7, 8) contains heating and humidification systems as well as independent temperature and humidity measurement equipment in the two areas, each fitted with separate controls.

5. Leavening cell structure as per the first, second or third claim, **characterised by** the fact that just one of said two chambers (7, 8) contains heating and humidification systems as well as independent temperature and humidity measurement equipment.
